# EUROPEAN PATENT APPLICATION

(11) **EP 1 921 580 A1**
(43) Date of publication of application: **14.05.2008**
(21) Application number: 06023150.3
(22) Date of filing: 07.11.2006
(51) Int. Cl.: G06Q 40/00, G07C 5/00

(54) **Efficient implementation of electronic data collection assisted vehicle insurance schemes**

(71) Applicant: Kovács, András, Budapest 1028 (HU); Pallett, Kevin, 2 Westhill Close Solihull West Midlands B92 7DD (GB)
(72) Inventor: Kovács, András, Budapest 1028 (HU); Pallett, Kevin, 2 Westhill Close Solihull West Midlands B92 7DD (GB)
(74) Representative: Grünecker, Kinkeldey, Stockmair & Schwanhäusser Anwaltssozietät

(57) **Abstract**

A system and method is provided for reporting positioning data of a vehicle to a central server. A class of vehicle insurance schemes relies on data received from electronic on-board devices in a client's vehicle - these are generally known as "Pay-As-You-Drive" insurance schemes. Related on-board devices up to now have been built as all-in-one units and closed systems. The present invention utilizes to full extent possible synergies between a client's mobile terminal and an on board device which implements positioning and data storage functionalities. Reporting of positioning data to a central server is achieved by establishing a local connection from the onboard device to the mobile terminal, transmitting stored positioning data and utilizing the processing, interface and communication facilities of the mobile terminal. Furthermore, the invention describes preprocessing of positioning data in the mobile terminal and an efficient billing scheme updating process utilizing a central accident database matching parameters derived from reported vehicle positioning data with accident data.

## Description

### Background of the invention

### Field of the Invention

The invention relates to a method and system for reporting positioning data of a vehicle to a central server. In particular, the present invention relates to a device for use in a vehicle allowing to determine positioning data of the vehicle and to report the positioning data to a central server for use in Pay-As-You-Drive insurance schemes.

### Description of the Related Art

The growing maturity of positioning technologies, such as GPS, and mobile data communication technologies has enabled vehicle insurance companies to consider differentiating incurred risks on an individual client basis. Client systems capable of providing required data for such differentiation must consist of at least positioning and data communications facilities. Reported and processed data is then affecting monthly insurance fees. In the simplest such scheme, the monthly insurance fee is simply proportional to the driven distance, hence such insurance offerings are collectively referred to as Pay-As-You-Drive insurance schemes.

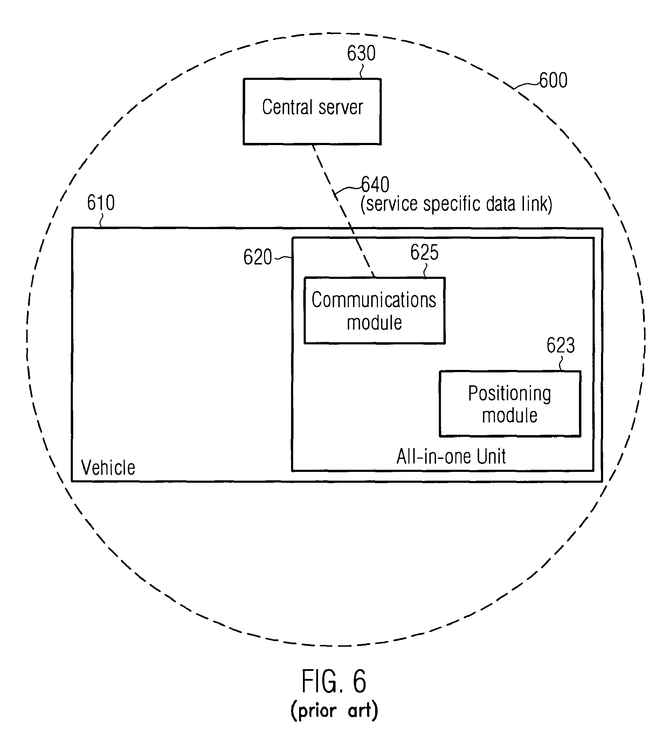

Prior to this invention, all such vehicle insurance schemes have relied on devices installed into the vehicle, which have been designed as all-in-one units and closed systems. Referring to Figure 6, a system 600 in accordance with known Pay-As-You-Drive insurance schemes will be described shortly. An All-in-one Unit 620 is installed into vehicle 610. All-in-one Unit 620 comprises a Positioning Module 623 and a Communications Module 625. By means of a service specific data link 640, data is transmitted from the All-in-one Unit 620 to a central server 630.

This conventional approach of implementing all required functions in a dedicated device and utilizing a dedicated, service specific data link involves high costs.

Further, privacy has been one problematic aspect of such conventional Pay-As-You-Drive insurance reporting schemes. Since the data link to the on-board device and the reporting process have been controlled from the insurer's service center, the client had no direct control over the frequency, accuracy and content of data reporting and tracing. Enforcement of having the client device always operational and always on-board has also been one problematic aspect of known Pay-As-You-Drive insurance schemes. Schemes prior to this invention have required a fixed installation of the client device into vehicles. Such installation creates additional costs because of the need for installation personnel and may cause physical damage to the vehicle.

It is therefore the object of the present invention to provide a cost efficient implementation of a system for reporting positioning data of a vehicle to a central server.

### Summary of the Invention

This object is solved by the subject matter of the independent claims.

A system is provided for reporting positioning data of a vehicle to a central server. The system comprises an on-board device for determining the position of the vehicle at different times, storing positioning data comprising a plurality of positioning data records in a storage of the on-board device, each positioning data record including a determined position and the associated time, and transmitting stored positioning data to a mobile terminal for receiving said transmitted positioning data and providing the positioning data to the central server and a central server for receiving the provided positioning data.

According to an aspect of the present invention, an apparatus for use in a vehicle is provided for reporting positioning data of the vehicle to a central server. The apparatus comprises a positioning means for determining the position of the vehicle at different times, a storage means for storing positioning data comprising a plurality of positioning data records, each positioning data record including a determined position and the associated time and a communication means for transmitting stored positioning data to a mobile terminal.

According to another aspect of the present invention, a method is provided for reporting positioning data of a vehicle to a central server. The method comprises the steps of determining, by an on-board device, the position of the vehicle at different times, storing, by the on-board device in a storage of the on-board device, positioning data comprising a plurality of positioning data records, each positioning data record including a determined position and the associated time, transmitting stored positioning data to a mobile terminal and providing the transmitted positioning data from the mobile terminal to the central server.

The present invention is based on the insight that the vast majority of vehicle insurance clients own a mobile terminal suited for transmitting data required in relation to Pay-As-You-Drive schemes. Furthermore, it is understood that current mobile terminals are equipped with additional communication means to establish a local-range data link. A user's existing mobile telecommunications subscription may further provide adequate identification of the user or a user identity can be pre-configured into the client software of a mobile terminal.

It is an advantage of the present invention that the functionality of the client equipment is distributed to the client's mobile terminal and the new, simplified on-board device. Positioning and data storage functionalities are implemented into the on-board hardware unit. This invention refers to this hardware unit as a Positioning and Storage Device (PSD). The data processing and reporting functionality of the system is installed as software into the client's mobile terminal. The present invention provides Pay-As-You-Drive vehicle insurance scheme reporting without service specific mobile data communications subscription costs by leveraging an existing telecommunications subscription of the vehicle's user.

It is a further aspect of the present invention to provide the functionality of preprocessing the data transmitted to the mobile terminal in the mobile terminal, thus providing the advantage of variable levels of data pre-evaluation by the application of averaging, weighting and totaling to data subsets before providing a data report to a central server.

It is still a further aspect of the present invention to provide interactive manual data input in the course of the reporting process, thus providing for error correction options and verification of reported data.

According to a further advantageous aspect of the present invention, the storage of the PSD is disencumbered by only storing positioning data records with position values differing by at least a predetermined threshold value.

### Brief Description of the Drawings

The above and other aspects, features and advantages of the embodiments of the present invention will become more apparent from the following detailed description when taken in conjunction with the accompanying drawings in which:
FIG. 1 is a block diagram illustrating an exemplary system according to an embodiment of the present invention;
FIG. 2 is a flowchart illustrating an exemplary operation of a positioning and storage device (PSD) according to an embodiment of the present invention;
FIG. 3 is a flowchart illustrating an exemplary reporting operation according to an embodiment of the present invention;
FIG. 4 is a flowchart illustrating a further exemplary reporting operation according to an embodiment of the present invention;
FIG. 5 is a flowchart illustrating an exemplary billing scheme updating process operation according to an embodiment of the present invention; and
FIG. 6 is a block diagram illustrating a conventional Pay-As-You-Drive insurance scheme reporting system.

### Detailed Description of Exemplary Embodiments

Exemplary embodiments of the present invention will now be described in detail with reference to the annexed drawings.

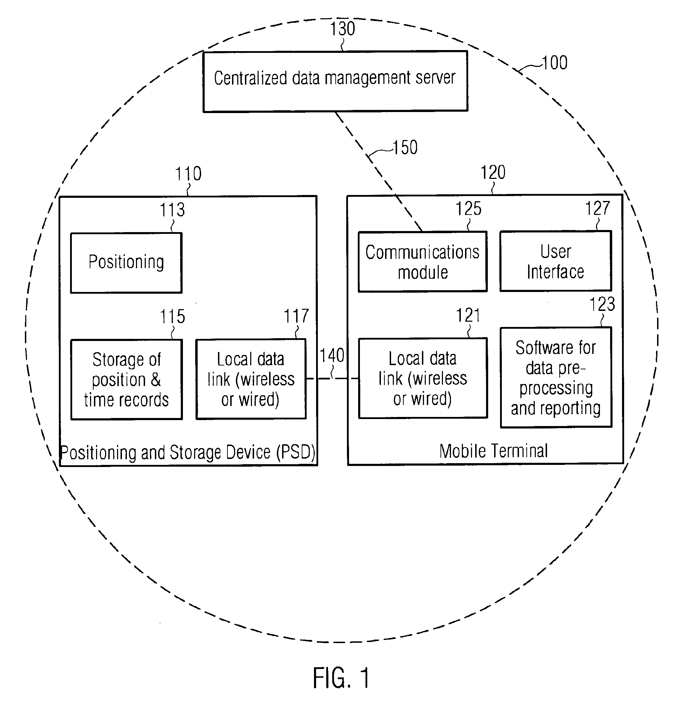

FIG. 1 is a block diagram illustrating an exemplary structure of a system for reporting positioning data of a vehicle to a central server according to a preferred embodiment of the present invention.

Referring to FIG. 1, the system 100 comprises an onboard Positioning and Storage Device 110 (PSD). Preferably, the PSD is kept operational and placed in or on the vehicle for which reporting of positioning data is desired. In an exemplary embodiment, the PSD may require a fixed installation inside the vehicle of the user. Alternatively, the PSD may be simply placed onto the dashboard or be placed into or on the vehicle by other means not requiring a fixed installation. The exemplary PSD comprises positioning means 113, storage means 115 and communication means 117. Positioning means 113 may make use of any of conventional positioning technologies such as GPS, thereby determining the position of the vehicle of the user at different times. Time dependent position information of the vehicle may serve as valuable information not only for navigation purposes, but also for Pay-As-You-Drive vehicle insurance schemes, traffic management applications and origin-destination matrix analysis applications.

Storage means 115 is used for storing positioning data records including determined positions of the vehicle and the times of determination of these positions. Positioning data records may comprise pairs of associated position and time records, but are not limited to these constituents. Storage means 115 may also exemplarily store cumulative data records, e.g. representing a driven mileage between two points in time.

Communication means 117 implements means for establishment of a local-range data link which may be wireless or wired.

According to the preferred embodiment of the present invention, the system 100 comprises a first data link 140 connecting the onboard PSD at dedicated times with a mobile terminal of the user of the vehicle. This first data link can be wireless or wired and preferably is of a local-range.

Mobile terminal 120 preferably comprises communication means 121 for establishment of the local-range data link to the PSD, software 123 for preprocessing of positioning data received from the PSD according to an advantageous embodiment of the present invention and for reporting of positioning data to a centralized data management server 130 via a conventional communications module 125 preferably utilizing an existing mobile telecommunications subscription of the user. Mobile terminal 120 also comprises a user interface 127, allowing for graphical display of requests for user input and interactive entering of data while executing software 123. Communications module 125 allows for the establishment of the second, wide-range data link 150 connecting mobile terminal 120 and centralized data management server 130. Mobile terminal 120 can be, for example, a cellular phone, a smartphone or a PDA.

Positioning means 113 may determine the position of the vehicle at predetermined points in time or in a cyclic manner according to a synchronized system clock. Local-range data link 140 may comprise an infrared connection, a radio frequency connection, e.g. Bluetooth, which is already incorporated in most current mobile terminals, WLAN, or any other standardized wireless or wired connection technology of local-range. This data link can also be utilized to provide real-time positioning information determined by the PSD to the mobile terminal by conforming to common standards for a wirelessly linked positioning sensor. One exemplary interface profile is the Local Positioning Profile (LPP) belonging to the group of Generic Object Exchange Bluetooth profiles. An advantageous embodiment of the PSD thus allows for synergistic use of the system 100 comprising bundled offering of e.g. a Pay-As-You-Drive vehicle insurance reporting scheme and a navigation solution. The second, wide-range data link connecting the mobile terminal 120 and the centralized data management server 130 is established utilizing a standardized mobile data communication technology, e.g. conforming to the Global System for Mobile communications (GSM) or the Universal Mobile Telecommunications System (UMTS), preferably connecting the Mobile Terminal via a base station to the Internet. By use of the user's existing telecommunications subscription, the user can be identified to the receiving central server by means of e.g. an International Mobile Subscriber Identity (IMSI). Centralized data management server 130 can be a centralized insurance company data management server or a centralized traffic management data server.

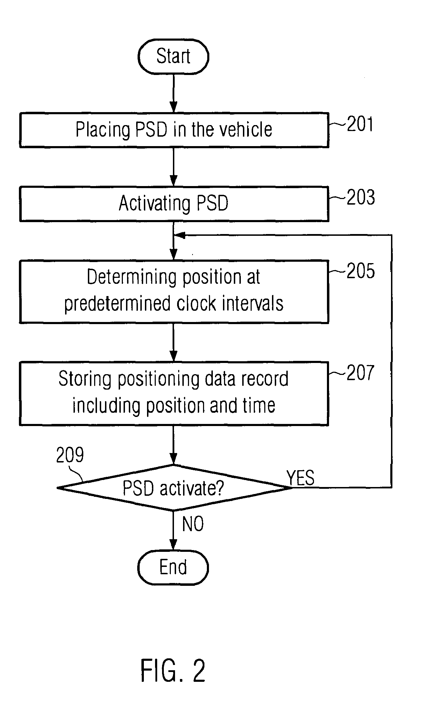

With reference to FIG. 2, a description will now be made of an exemplary operation flow of the positioning and storage device (PSD) according to an exemplary embodiment of the present invention.

FIG. 2 shows an exemplary flowchart illustrating an operational cycle describing the determination and storage of positioning data according to an exemplary embodiment of the present invention. Referring to FIG. 2, the PSD is placed in or on the vehicle of the user in step 201. This placement can be any of a fixed installation or a temporary, non-fixed placement of the PSD inside or on the vehicle, preferably by means of a holder arrangement.

In step 203, the PSD is activated. Activation can be performed manually. Alternatively, the PSD may be activated by connection to a power source of the vehicle. Once enabled, the PSD determines the position of the vehicle by determining its own position with a positioning technology conforming to e.g. the Global Positioning System (GPS) in step 205, exemplarily at predetermined clock intervals or in a cyclic manner. The positioning data record including the determined position and the time of determination, together forming an associated position and time record pair, is stored in step 207. Preferably, only positioning data records with position values differing by at least a predetermined threshold value from the last stored position value are stored. The procedure of determining and storing of positioning data is repeated as long as the PSD is determined to be active in step 209. An explicit determination as described above with reference to step 209 is not necessary. Alternatively, the PSD may repeat the steps of determining and storing as long as the PSD is activated.

An incentive for the client to always keep the PSD functional and in or on the vehicle is based on the fact that risk of vehicle theft is not directly proportional to the amount of driven distance or time. Risk of vehicle theft is most of all related to security of the vehicle's most frequent parking locations, thus the vehicle is at risk even when it is not used. Offering theft coverage as a fixed fee for a period of time, from which the customer may receive rebates when using the vehicle in relatively secure areas, provides for an exemplary incentive for clients to keep their PSD always functional and inside the vehicle, thereby to document low insurance risk and conditionally receive such rebates. For instance, one logical implementation would give driver rebates from theft coverage for each day when the vehicle has been driven only within an area of low vehicle theft rate. The more secure an area is, as judged by criminal statistics, the larger the rebate would be.

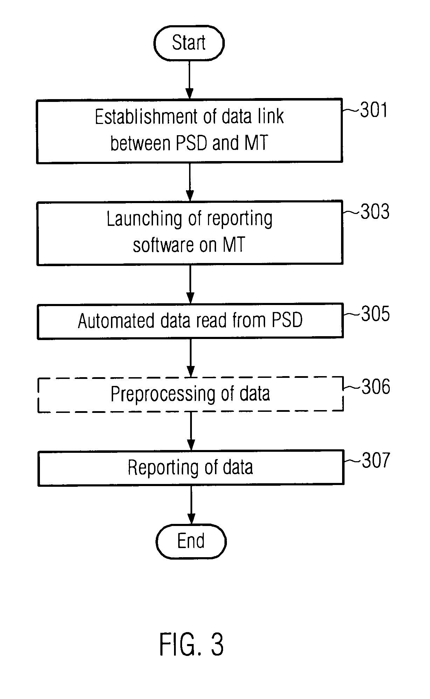

FIG. 3 shows an exemplary flowchart illustrating the reporting process according to an exemplary embodiment of the present invention.

Referring to FIG. 3, in a first step 301, a data link between the PSD and mobile terminal is established. The data link may be established by bringing the mobile terminal into the required range for the local-range data link to the PSD or upon manually connecting the PSD and the mobile terminal. The data link may further be established by the step of launching the reporting software 123 on the mobile terminal in step 303. Accordingly, steps 301 and 303 may be interchanged. In step 305, positioning data is automatically read from the PSD and transmitted to the mobile terminal. Reporting does not need to take place frequently, for example, once a month depending on PSD storage capacity or on a reporting frequency as requested e.g. by a vehicle insurance company. Any subtotal of the positioning data records stored in the storage 115 of the PSD may be transferred in such a data readout process. According to an advantageous embodiment, positioning data records transmitted to the mobile terminal are subsequently deleted from storage 115. According to a further advantageous embodiment, the transmitted positioning data is preprocessed in the mobile terminal in step 306 by software 123. The data preprocessing, in combination with user controlled timing of the reporting process, allows for maintenance of the user's privacy. The preprocessing may comprise averaging, totaling or application of weightings to the positioning data. It may further comprise matching of position records to location categories as provided, for example, by a vehicle insurance company with software 123. Exemplarily, the length of run in each of the provided categories, a total time spent in respective location categories or a total time driven in time of day categories may be derived in the preprocessing step 306 taking place in the mobile terminal.

Subsequent to the automated data read in step 305 or the preprocessing of the positioning data in step 306, the positioning data is reported from mobile terminal 120 to the centralized data management server 130 in step 307, finishing the reporting operation.

The software implementation at the mobile terminal may require a user to initiate the reporting procedure or may operate automatically. In any case, the driver can be certain that no reporting will take place unless the PSD and the mobile terminal are in communication range and the data link between them is activated. Such reporting would be typically required once a month or once every few months, for example, therefore the reporting scheme does not pressure the driver to give out any real-time or recent information about his or her driving destinations or areas. According to the advantageous preprocessing operation, transmittance of detailed tracking information in relation to the time dependent position of the user's vehicle may be circumvented.

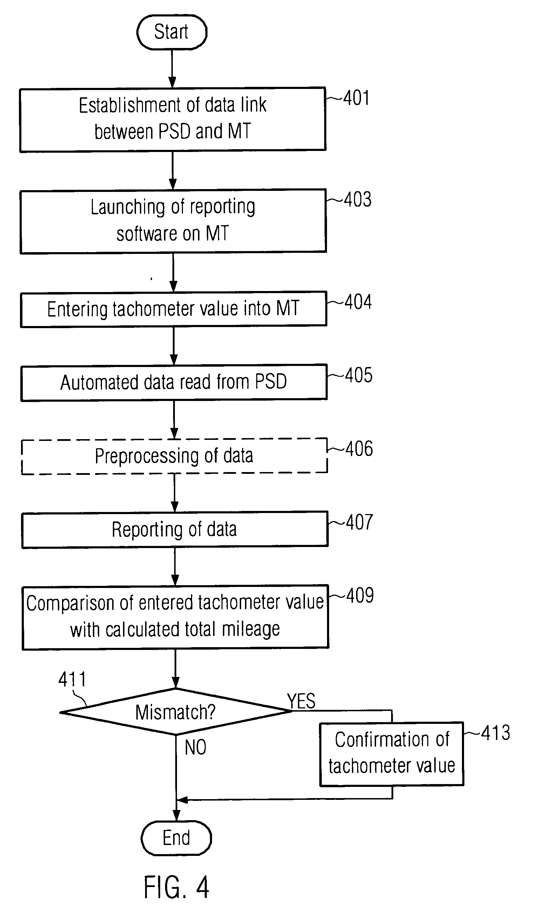

FIG. 4 shows a flowchart illustrating a further exemplary reporting operation according to an embodiment of the present invention.

Referring to FIG. 4, as before, a data link between the PSD and the mobile terminal is established in step 401 and the reporting software on the mobile terminal is launched in step 403. Subsequently, the reporting software may request the user to enter the tachometer mileage value as displayed on the vehicle's instrument panel in step 404. In step 405, an automated positioning data readout from the PSD is performed. Subsequently, the data may be preprocessed in step 406 and is reported to the central server in step 407. According to this embodiment, a comparison of the entered tachometer mileage value with a calculated total mileage of the vehicle takes place in step 409. A comparison of the tachometer readout, the set of previously declared tachometer readings and reported data logs may uncover intentional manipulation attempts. This also enables detection of a malfunctioning PSD and a manual correction for any outages of the PSD. In step 411, it is determined whether there is a mismatch between the entered tachometer mileage value and the calculated total mileage serving as a reference value. If not, the process finishes. In the case of a mismatch, the user may be requested by the reporting software to confirm the tachometer value in step 413. This advantageous embodiment of the reporting operation utilizes the existence of user interface 127 in the conventional mobile terminal. Additionally, at each reporting event, the driver may receive feedback if there is a significant mismatch between the declared tachometer readout value and the calculated tachometer mileage value serving as a reference value, thereby allowing the user to correct any possible mismatch in due time.

Combining manual tachometer readouts within the reporting process also has the advantage of enabling software correction of cumulative distance errors between PSD recorded way-point positions. With some insurance schemes, for example, mileage-based billing, cumulative distance value is directly proportional to the client's insurance fee. With other schemes, such as billing for days with vehicle movement, distance measurement errors have no relevance. The possibility of manual readouts enables detection of a malfunctioning PSD and manually correcting for any outages as well. Pay-As-You-Drive insurance implementations prior to this invention did not have an interactive user interface, as it would have been too expensive and cumbersome to add such facility into a permanently installed on-board device.

A complete insurance process may include certified tachometer readout during insurance claim processing. Comparison of this tachometer readout, the set of previously declared tachometer mileage readings, and reported data logs uncovers intentional manipulation attempts. The insurer may state that vehicle insurance is void if the above described comparison during claims inspection uncovers manipulation attempts. The driver is then aware that a valid insurance policy is conditional on always keeping the PSD functional in the vehicle.

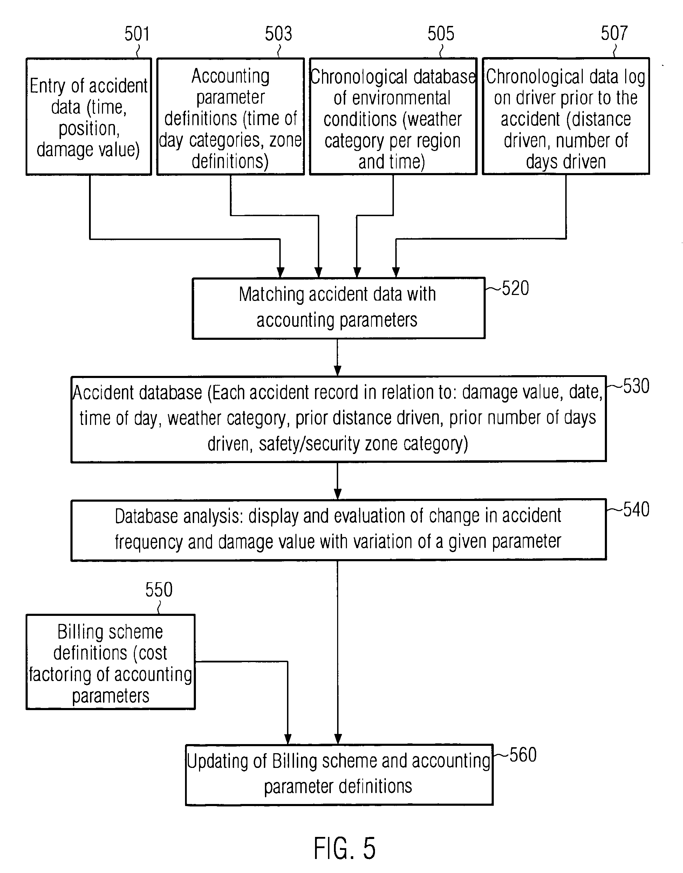

FIG. 5 describes a billing scheme updating process of an exemplary Pay-As-You-Drive insurance scheme in an insurance data management system according to an advantageous embodiment of the present invention.

An account of the following parameter set as a billing basis for covering collision damage is proposed, where each of the described parameters can be determined on the basis of provided PSD data:
- Number of days driven during the period to be accounted for. This data is created by checking each day to see whether there has been a GPS-detected movement registered by the PSD. Number of days driven has direct relation to accident risk.
- Distance driven during the period to be accounted for. This data is created by adding up GPS-detected displacement data registered by the PSD. Distance driven has a direct relation to accident risk.
- Weather conditions during the time of vehicle's utilization, where utilization is detected by GPS displacement and its time is derived from a GPS-synchronized clock. The insurance service center keeps track of weather categories across the area of interest - the information source can, for example, be weather reports. Certain weather categories have a direct relation to accident risk. Upon receipt of a client report, utilization times are matched with detected weather categories for those times. The distribution of these matched weather categories is then accounted for when billing, as devised by the particular insurance scheme.
- Time of day during vehicle's utilization, where utilization is detected by GPS displacement and its time is derived from GPS-synchronized clock. The data report gives detailed information on the occurrence of time-of-day categories of driving within the accounting period. The insurer may define bounding hours for the time-of-day categories. Certain times of day entail different accident risk than others, for example, driving late at night has different risks than driving midday. The distribution of these time-of-day categories is then accounted for when billing, as devised by the particular insurance scheme.
- Safety category of driven zones, where the zone is identified by matching GPS derived position data to zone boundary definitions. The data report gives detailed information on the frequency of driving within a given zone. The insurer may define zone boundaries so that defined zones have distinct characteristics regarding accident density. For example, areas with many dangerous intersections - so called black spots - would be defined as a zone with a category indicating poor safety. The distribution of these safety categories within PSD data record is then accounted for when billing, as devised by the particular insurance scheme.

The above described dynamic parameters all bear some relation to risk of vehicle accidents. An effective Pay-As-You-Drive scheme factors these parameters - or a subset of them - into the customer fee definition scheme in such a way that there is a high correlation between each parameter value and the accident risk. To obtain this correlation, there must be a feedback which statistically displays accident frequency at a given parameter variation, with all other parameters having a fixed value or averaged together. This invention proposes that every accident's time, position, and related damage value are entered into the Pay-As-You-Drive system either during the claim inspection process or from some available database. The Pay-As-You-Drive system then matches the actual value of each accounting parameter to the accident data. It shall offer an interface for browsing through accident history. This interface shall allow the change in accident frequency and damage value to be observed over a selected time-window with the variation of a certain parameter while all other parameters are possibly filtered within a specified parameter range. Such analysis shall allow the insurer to determine a proper relation between parameter values and collision coverage fee structuring.

Referring to Figure 5, the steps of entry of accident data comprising time, position and damage value either during the claim inspection process or from some available database in step 501, input of accounting parameter definitions, e.g. time of day, categories, zone definitions, in step 503, input from a chronological database of environmental conditions, e.g. weather categories per region and time, in step 505 and input from the chronological data log on the driver prior to the accident, e.g. distance driven and number of days driven, in step 507 are performed in any order to match data of a current accident with the defined accounting parameters in step 520. The matched data is then input into an accident database where each accident record is included in relation to its respective data records comprising damage value, date, time of day, weather category, prior distance driven, prior number of days driven, safety zone and security zone category in step 530. On the basis of this accident database, an analysis including the display and evaluation of the change in accident frequency and damage value with variation of any given parameter comprising but not limited to the above listed data records is performed in step 540. Input from this analysis in combination with the current billing scheme definitions including the cost factoring of accounting parameters according to step 550 is then utilized to update the billing scheme and the accounting parameter definitions in step 560.

Similarly, the invention exemplarily proposes accounting for the following as a billing basis for covering theft damage, which can be easily extracted from the PSD data:

Security category of driven zones and parking zones, where the zone is identified by matching GPS derived position data to zone boundary definitions. The positioning data report gives detailed information on the frequency of driving within a given zone. The insurer may define zone boundaries so that defined zones have distinct characteristics regarding vehicle theft. For example, areas with a higher vehicle theft rate would be defined as zones with a category indicating poor security. The distribution of these security categories within a reported PSD data record is then accounted for when billing, as devised by the particular insurance scheme. In an efficient implementation, only those position way-points would be retained for estimation of security zone category, which have a long time difference towards the next position record. In other words, the preprocessing algorithm shall filter for parking positions only.

Similarly to the above described feedback mechanism for setting a collision damage coverage fee structure, there should be a proper chronological overview of geographic distribution of vehicle theft incidents. This invention proposes that every vehicle theft's time, position, and related damage value are entered into the Pay-As-You-Drive system either during the claim inspection process or from some available database. The Pay-As-You-Drive system then matches the actual value of the security zone category to this incident data. It shall offer an interface for browsing through incident history. This interface shall allow the change in theft incident frequency and damage value to be observed over a selected time-window with the variation of a security zone category. Such an analysis shall allow the insurer to determine proper relation between security zone category settings and theft coverage fee structuring. This invention proposes a fixed monthly fee for coverage of vehicle theft, from which customers would get a rebate, as determined by described coverage fee structuring. Thus, ultimately, areas of vehicle parking determine the cost of theft coverage, while at the same time low risk customers have an incentive to always keep the PSD operational and in the vehicle.

Various applications could exploit data collected by the PSD besides the preferred Pay-As-You-Drive vehicle insurance scheme. One such example is traffic management. Traffic management applications require only statistically averaged chronological data, and not data traceable to any individual. Therefore, traffic management is a good example of applications, for which data generated through the proposed positioning data reporting process would be valuable. This invention proposes reselling detailed PSD generated data, after some application-specific averaging. This would increase the efficiency of the Pay-As-You-Drive insurance scheme, which is the primary application of the proposed positioning data reporting scheme. With advances in mobile telecommunications, more and more data can be sent to insurance processing centers at the same cost, thereby gradually increasing the set of economically retainable route details. Ensuring customer privacy is a key acceptance detail for such data sharing, and it can be achieved by reselling averaged data and never single route data. In the traffic management application case, route data averaged into an origin-destination matrix for a given geographic area could be provided.

While the present invention has been shown and described with reference to certain exemplary embodiments thereof, it will be understood by those skilled in the art, that various changes in form and detail and combinations may be made therein without departing from the scope of the invention as defined by the appended claims. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A method for reporting positioning data of a vehicle to a central server, comprising the steps of:
determining, by an on-board device, the position of the vehicle at different times;
storing, by the on-board device in a storage of the on-board device, positioning data comprising a plurality of positioning data records, each positioning data record including a determined position and the associated time;
transmitting stored positioning data to a mobile terminal; and
providing the transmitted positioning data from the mobile terminal to the central server.

2. The method according to claim 1, wherein the step of transmitting is performed at a predetermined time or a time selected by a user.

3. The method according to one of claims 1 or 2, wherein the step of transmitting is performed once per predetermined reporting period.

4. The method according to one of claims 1 to 3, wherein the step of transmitting is performed utilizing a wired or wireless local-range data link.

5. The method according to claim 4, wherein the local-range data link is a Bluetooth connection.

6. The method according to one of claims 1 to 5, wherein the step of providing comprises preprocessing the transmitted positioning data by the mobile terminal.

7. The method according to one of claims 1 to 6, wherein the mobile terminal is one of a cellular phone, smartphone or PDA.

8. The method according to claim 7, wherein the mobile terminal provides the transmitted positioning data from the mobile terminal to the central server using a telecommunications subscription identifying a user.

9. The method according to one of claims 1 to 8, further comprising the step of requesting, by the mobile terminal, input of the displayed tachometer mileage value of the vehicle.

10. The method according to claim 9, further comprising the step of comparing the input tachometer mileage value with a calculated total mileage.

11. The method according to one of claims 1 to 10, wherein said vehicle is one of a car, motorcycle or truck.

12. A system for reporting positioning data of a vehicle to a central server, comprising:
an on-board device for determining the position of the vehicle at different times, storing positioning data comprising a plurality of positioning data records in a storage of the on-board device, each positioning data record including a determined position and the associated time, and transmitting stored positioning data to a mobile terminal;
a mobile terminal for receiving said transmitted positioning data and providing the positioning data to the central server; and
a central server for receiving the provided positioning data.

13. The system according to claim 12, wherein the on-board device and the mobile terminal are adapted for being connected by a wired or wireless local-range data link.

14. The system according to claim 13, wherein the local-range data link is a Bluetooth connection.

15. The system according to one of claims 12 to 14, wherein the mobile terminal comprises software for preprocessing the transmitted positioning data.

16. The system according to one of claims 12 to 15, wherein the mobile terminal is one of a cellular phone, smartphone or PDA.

17. The system according to claim 16, wherein the mobile terminal provides the transmitted positioning data from the mobile terminal to the central server using a telecommunications subscription identifying a user.

18. The system according to one of claims 12 to 17, wherein the mobile terminal comprises a user interface and software for requesting input of the displayed tachometer mileage value of the vehicle.

19. The system according to claim 18, further comprising means to compare the input tachometer mileage value with a calculated total mileage.

20. The system according to one of claims 12 to 19, wherein the central server is a centralized insurance data management server or a centralized traffic management server.

21. The system according to one of claims 12 to 20, wherein the on-board device comprises a GPS device for determining the position of the vehicle.

22. The system according to one of claims 12 to 21, wherein said vehicle is one of a car, motorcycle or truck.

23. An apparatus for use in a vehicle for reporting positioning data of the vehicle to a central server, comprising:
a positioning means for determining the position of the vehicle at different times;
a storage means for storing positioning data comprising a plurality of positioning data records, each positioning data record including a determined position and the associated time; and
a communication means for transmitting stored positioning data to a mobile terminal.

24. The apparatus according to claim 23, wherein the communication means is adapted for establishing a wired or wireless local-range data link for transmitting the stored positioning data to a mobile terminal.

25. The apparatus according to claim 24, wherein the local-range data link is a Bluetooth connection.

26. The apparatus according to one of claims 23 to 25, further comprising:
means for determining whether a determined position value differs from another determined position value by at least a predetermined threshold value; and
controlling means for only storing a positioning data record in the storage means if the position value of the positioning data record differs from the position value of the last stored positioning data record by at least the predetermined threshold value.

27. The apparatus according to one of claims 23 to 27, wherein the positioning means is a GPS device.

28. The apparatus according to one of claims 23 to 27, wherein the apparatus is not permanently installed into the vehicle.

29. The apparatus according to one of claims 23 to 28, wherein the communication means transmits the stored positioning data upon request by the mobile terminal.

30. The apparatus according to one of claims 23 to 29, wherein said vehicle is one of a car, motorcycle or truck.
